# EUROPEAN PATENT APPLICATION

(11) **EP 3 037 652 A1**
(43) Date of publication of application: **29.06.2016**
(21) Application number: 14199984.7
(22) Date of filing: 23.12.2014
(51) Int. Cl.: F03B 13/26, B63B 35/00, E02B 17/08

(54) **A displacement system and method for a submersible electrical system**

(71) Applicant: Openhydro IP Limited, Dublin 2 (IE)
(72) Inventor: Dunne, Paul, Dublin, 9 (IE); Doyle, Thomas, Dublin, 6 (IE)
(74) Representative: O'Neill, Brian

(57) **Abstract**

A displacement system (10) for a submersible electrical system such as a tidal turbine system (12), the displacement system (10) comprising a base (14) for the turbine (12) or related electrical components, a vessel (18) having a buoyant body (20) and at least three rigid legs each displaceable relative to the body between a raised and a lowered position, and in which the base is adapted to be secured to and displaceable by the three legs (22) in order to allow the base (14) to be deployed or retrieved from the seabed using the legs (22), which legs can also be utilised to raise the body of the vessel (18) out of the water to provide a stable work platform above the deployment site.

## Description

### Field of the invention

The present invention is concerned with a system and method of displacing a submersible electrical system such as a hydroelectric turbine within a body of water, which system and method permit such an electrical system to be both deployed onto the seabed or other underwater substrate, to be retrieved from the seabed, and to provide a stable platform from which various operations may be carried out in connection with the commissioning, maintenance and decommissioning of such a turbine system.

### Background of the invention

As a form of renewable energy, tidal power is an extremely attractive proposition, having the potential to provide constant, predictable and abundant supplies of energy.

There are however significant difficulties and obstacles to overcome in order to realise the potential of tidal power. The overwhelming difficulties stem from the very conditions which give rise to the energy generating potential, the strong tidal velocities, also make working with large scale marine installations at these sites extremely challenging, both in initial deployment of turbines and bases or related submersible electrical equipment, and in testing, maintenance, recovery, repair, etc. The constant change in tidal direction, in addition to the velocity of the tidal flow between changes, presents significant challenges when trying to lower a turbine and/or base onto the seabed and establishing subsequent electrical connections. The process is further complicated in the event of using multiple vessels as is generally necessary, as maintaining a fixed distance and orientation between vessels in said conditions requires constant corrections and even then is very difficult.

Existing methods of deployment seek to conclude the deployment operation within a single tidal cycle, approximately a six hour window, a very short period of time for the type of operations to be undertaken and the on site conditions to be dealt with.

It is therefore an object of the present invention to overcome some of the above mentioned problems.

### Summary of the invention

According to a first aspect of the present invention there is provided a displacement system for a submersible electrical system, the displacement system comprising a base; a vessel comprising a buoyant body and at least three rigid legs each displaceable relative to the body between a raised and a lowered position; wherein the base is adapted to be secured to and displaceable by the three legs.

Preferably, the system comprises a frame locatable intermediate the legs and the base.

Preferably, the frame is adapted to limit displacement of the legs relative to one another.

Preferably, the frame comprises couplings to establish a connection with a free end of each of the legs.

Preferably, the frame comprises couplings for establishing a connection the base.

Preferably, the frame comprises connectors for establishing a connection with a free end of each of the legs.

Preferably, the base comprises three ground contacting feet positioned to each be coincident with one of the legs when the base is secured beneath the legs.

Preferably, the system comprises a drilling system in operative association with at least one of the legs.

Preferably, the system comprises a grouting system in operative association with at least one of the legs.

Preferably, the vessel comprises a lifting system.

Preferably, the lifting system comprises one or more winches operable to raise and lower a respective line from the vessel.

Preferably, the base is designed to bear the load of the vessel when raised out of a body of water on the legs.

Preferably, one or more of the legs are independently displaceable relative to the body of the vessel.

According to a second aspect of the present invention there is provided a method of displacing a submersible electrical system in a body of water comprising the steps of:
securing a base for the electrical system beneath at least three rigid legs of a deployment vessel; and
displacing the legs relative to a buoyant body of the vessel in order to displace the base within the body of water.

Preferably, the method comprises the step of positioning a frame intermediate a free end of each of the legs and the base.

Preferably, the method comprises the step of displacing the base into contact with an underwater substrate through displacement of the legs relative to the body of the vessel.

Preferably, the method comprises the step of raising the body of the vessel out of the body of water through further displacement of the legs relative to the body of the vessel following contact of the base with the underwater substrate.

Preferably, the method comprises the step of performing one or more operations relating to the electrical system while the body of the vessel is raised out of the body of water.

Preferably, the method comprises the step of independently displacing one or more of the legs.

Preferably, the method comprises utilising the legs to force one or more ground contacting feet of the base to at least partially penetrate the deployment substrate.

As used herein, the term "electrical system" is intended to mean an electrical system for use underwater, and in particular in a marine environment, and which may include a tidal turbine and/or one or more electrical components for managing and/or conditioning the generation of electricity from one or more of such turbines, and which electrical system may initially comprise only a base on which the turbine or electrical components are mountable and which base may serve as an electrical connection point or interface between the turbine/electrical system and an electrical cable.

As used herein, the term "lift" is intended to mean raising an object from one height or location to a greater height or location, in addition to meaning the controlled lowering of an object from one height or location to a lesser height or location.

### Brief description of the drawings

The present invention will now be described with reference to the accompanying drawings, in which:
Figure 1 illustrates a displacement system for a submersible electrical system such as a hydroelectric turbine, located above a deployment site in preparation for deployment;
Figure 2 illustrates the displacement system of Figure 1 in which the electrical system has been deployed onto the seabed;
Figure 3 illustrates the displacement system as shown in Figures 1 and 2, from which the deployed electrical system has been released;
Figure 4 illustrates the displacement system of Figures 1 to 3 with an alternative base for the electrical system; and
Figure 5 illustrates the displacement system of Figures 1 to 3 with a further alternative base for the electrical system.

### Detailed description of the drawings

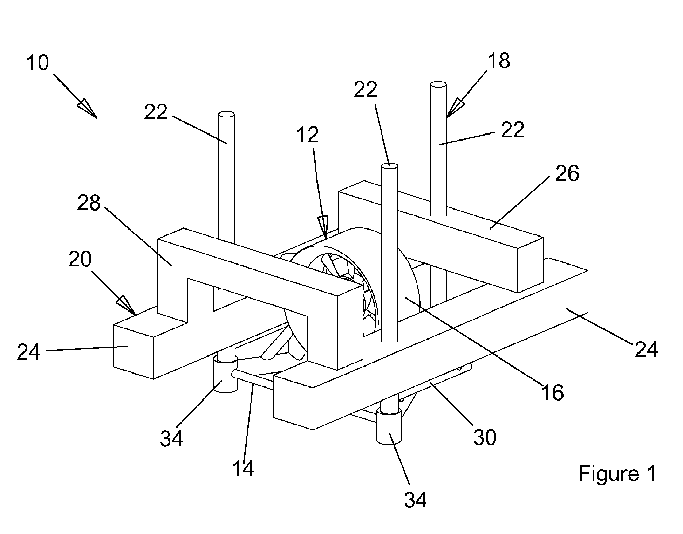

Referring now to Figures 1 to 3 of the accompanying drawings there is illustrated a displacement system according to a first embodiment of the present invention, and generally indicated as 10. The displacement system 10 is intended for use in performing deployment, retrieval, testing, repair and other operations on a submersible electrical system, for example a hydroelectric turbine system 12.

In the embodiment illustrated the electrical system 12 comprises a base 14, preferably but not exclusively in the form of a gravity base, and a tidal turbine 16 which is mountable to the base 14. It will however be understood from the following description of the configuration and operation of the displacement system 10 that the base 14 could be of any other suitable form, and could for example be arranged to be actively secured to the seabed by pinning, piling, bonding or any other suitable means. Similarly it will be appreciated that the turbine 16 could be replaced with any other suitable alternative electrical component, for example for use in the transmission and/or conditioning of electricity generated from one or more turbines 16 in an array. Similarly the type of turbine may vary considerably from that of the exemplary turbine 16 described and shown.

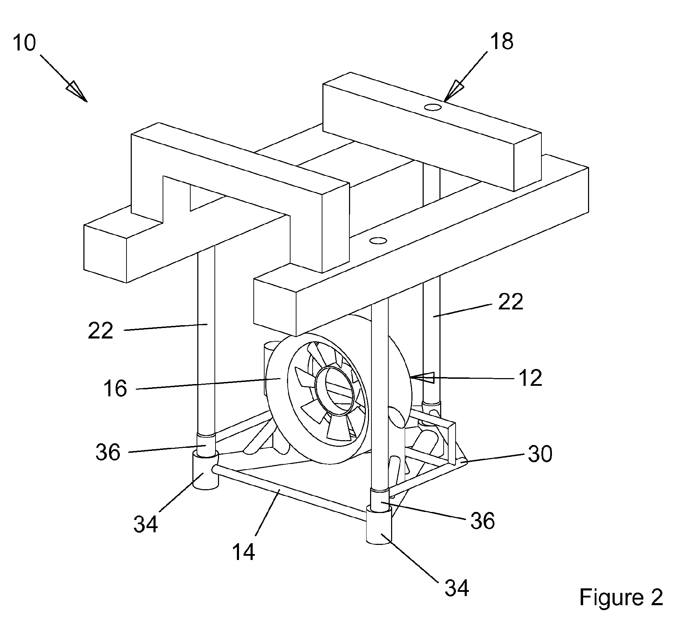

The displacement system 10 further comprises a vessel 18 having a buoyant main body 20 and at least three rigid legs 22 which are in operative association with the main body 20, and can be displaced relative to the main body 20, preferably between a raised position as illustrated in Figure 1 and a lowered position as illustrated in Figure 2. The raising and lowering of the legs 22 may be achieved by any suitable means, and for example could be achieved through the provision of a rack (not shown) on each of the legs 22, and a corresponding driven pinion (not shown) on the main body 20 in order to effect the linear displacement of the legs 22. It will however be appreciated that any other suitable arrangement may be employed in order to achieve the above mentioned functionality.

The main body 22 is buoyant and in the preferred embodiment illustrated comprises a pair of catamaran style hulls 24 spaced from one another and connected together by means of a first cross member 26 and a second cross member 28. Any other suitable configuration may however be employed, although the pair of spaced apart hulls 24 permits the turbine system 10 to be secured with the base 14 directly beneath the hulls 24 and the turbine 14 located in the space between the hulls 24, providing visibility and access to the turbine 14 while in this position.

The displacement system 10 is adapted to allow the turbine system 12 to be secured to the legs 22 such that the turbine system 12 may be displaced with the legs 22, for example from the raised position as illustrated in Figure 1 to a lowered or deployed position as illustrated in Figure 2. In this way the displacement system10 enables the turbine system 12 or any other related electrical system to be transported to a deployment site using the vessel 18, and to then be lowered onto the seabed or other underwater deployment substrate by means of the lowering of the three legs 22. Any suitable connection may be provided between the legs 22 and the turbine system 12 in order to allow the system 12 to be retained securely on the legs 22, and preferably beneath the legs 22, and to be suitably released therefrom as necessary, from example when the turbine system 12 has been fully deployed onto the seabed.

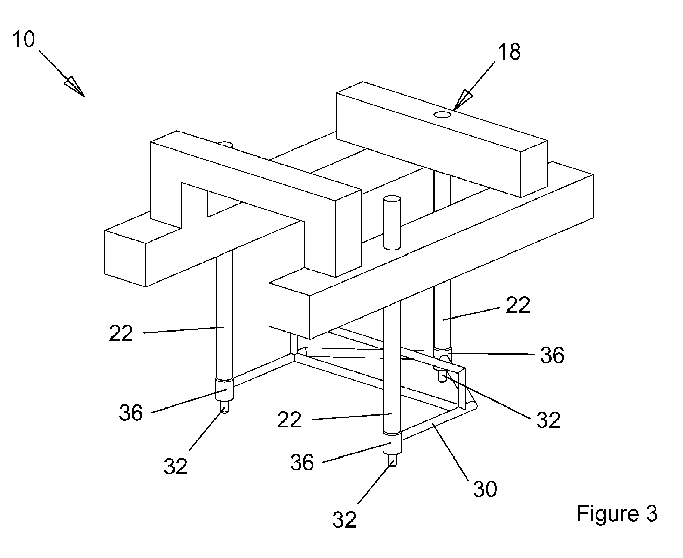

In the preferred embodiment illustrated the displacement system 10 comprises a frame 30 which is securable between the legs 22, and most preferably to the underside of the legs 22, while also being engagable with the base 14, such as to be then located intermediate the legs 22 and the turbine system 12. The frame 30 acts to immobilise the legs 22, and in particular the free lower ends thereof, relative to one another in order to stiffen three legs 22 during deployment, retrieval and other operations. The frame 30 further provides a useful vehicle for carrying one or more couplings 32 for engaging and retaining the base 14. Referring to Figure 3 the couplings 52 may take the form of conventional ball grabs positioned to be locatable into each one of three feet 34 of the base 14. The couplings 32 are preferably remotely actuatable, for example from the main body 20 of the vessel 18. The frame 30 defines a stiffening template which will ensure that the couplings 32 are aligned with the feet 34 or other suitable lifting points, when the turbine system 10 is to be engaged with the legs 22.

The frame 30 may also be retained on the free end of the legs 22 once the turbine system 12 has been deployed on the seabed, and the legs 22 retracted in order to leave the turbine system 12 on the seabed as illustrated in Figure 3. The frame 30 will therefore continue to provide stiffening reinforcement to the legs 22, which will be particularly beneficial should the vessel 18 be utilised to retrieve a deployed turbine system 12 from the seabed, again ensuring alignment of the couplings 32 with the feet 34 or other lifting point on the base 14. The frame 30 incorporates three connectors 36, one for each of the legs 22, which in the embodiment illustrated are in the form of a hollow cylindrical sleeve into which the free end of the respective leg 22 may be inserted, with suitable locking means (not shown) being provided in order to retain the free end of the leg 22 therein. Such locking means are preferably remotely actuatable.

Thus in use the displacement system 10 is transported to a deployment site with the turbine system 12 secured beneath the buoyant main body 20 by means of the legs 22. Once at the deployment site the legs 22 may be displaced downwardly relative to the main body 20 in order to displace the turbine system 12 towards and onto the seabed or other underwater deployment substrate. Once the base 14 is located securely on the seabed, and the deployment operation is completed, the couplings 32 on the frame 30 may be remotely disengaged from the base 14 and the legs 22 raised in order to leave the turbine system 12 in position on the seabed.

However it may also be desirable to perform additional operations on the turbine system 12 once deployed onto the seabed, which operations are conventionally rendered difficult by virtue of the high velocity tidal flow present at the deployment site, requiring constant corrections to maintain the vessel 18 in position while such operations are performed. The displacement system 10 overcomes this problem by allowing the main body 20 of the vessel 18 to be raised upwardly out of the water and thus no longer be subject to the tidal velocities present, thereby providing a stable elevated platform from which numerous operations may be performed. This may be achieved by deploying the turbine system 12 onto the seabed as illustrated in Figure 2, and at this point keeping the frame 30 secured to the base 14 and further displacing the legs 22 relative to the main body 20. This process will act to raise the main body 20 out of the body of water, effectively jacking up the main body 20 on the base 14, which is itself supported on the seabed. The legs 22 thus bear downwardly on the base 14 via the intermediate frame 30, and as the base 14 is sitting on the seabed the legs 22 cannot be lowered any further and so further relative movement between the main body 20 and the legs 22 results in the above mentioned raising of the main body 20 out of the body of water. The base 14 must therefore have sufficient strength to bear the load of the vessel 18 thereon. For this reason it is beneficial, as can be seen from Figure 2, for the legs 22 to be coincident with the feet 34 of the base 14, in order to allow the loading generated by the vessel 18 to be transferred vertically downward through the feet 34 into the seabed.

As the displacement system 10 of the present invention enables the vessel 18 to establish a stable platform in the form of the raised main body 20, significant time can then be spent at the deployment site, allowing additional operations to be performed. For example drilling or grouting operations may be performed in order to actively secure the base 14 to the seabed. One or more drilling systems (not shown) or grouting systems (not shown) may therefore be provided in operative association with one or more of the legs 22 or the frame 30, which system could then be remotely operated in order to perform the necessary operations. The raised main body 20 may also provide a stable platform from which electrical connections, commissioning, decommissioning, repair or other testing operations may be performed on the turbine 16. It is also envisaged that the turbine 16 could be decoupled from the base 14 and raised upwardly into a position between the hulls 24, from where a large number of operations could be performed directly on the turbine 16. Raising the turbine 16 could be achieved by means of an additional lifting system (not shown) provided on the vessel 18, for example one or more winches (not shown) which could be used raise/lower the turbine 16 as required. Such operations could be performed while the legs 22 remain standing on the base 14 in order to ensure a stable platform.

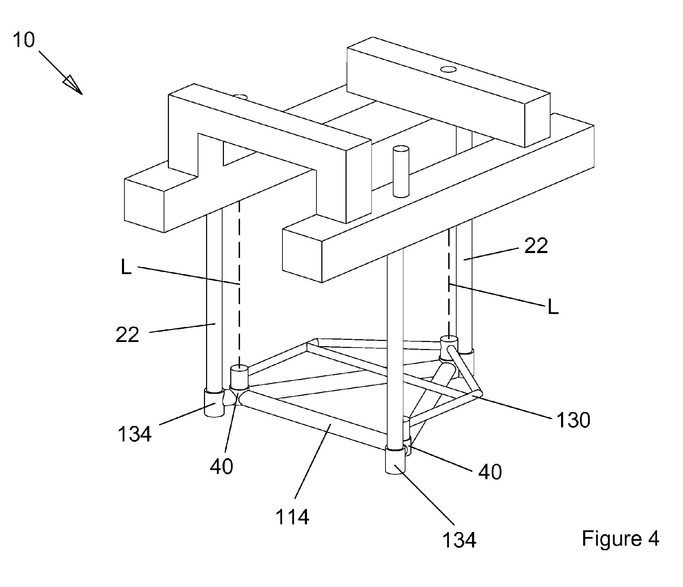

Referring to Figure 4 the displacement system 10 is illustrated with an alternative design of base 114, and frame 130. In this alternative design the base 114 comprises three feet 134 which are again positioned to be coincident with the three legs 22 of the vessel 18. In this way the frame 114 is secured directly to the underside of the legs 22, and may be raised and lowered as hereinbefore described. The frame 130 is no longer provided as an intermediary between the legs 22 and the base 114, and is dimensioned such that three couplings 132 of the frame 130 engage three lifting points 40 formed in the base 114 separate to the feet 134. The frame 130 may then be tethered to the main body 20 by means of a number of lowering lines L fed from the winches (not shown) of the lifting system (not shown). The frame 130 may therefore be raised and lowered relative to the vessel 18 independently of the legs 22 and the base 114. The frame 130 may therefore be used to raise and lower the turbine 16 independently of the base 114, or may be used to raise and lower the entire turbine system 12 including the base 114 once the legs 22 have been displaced into the raised position out of register with the base 114.

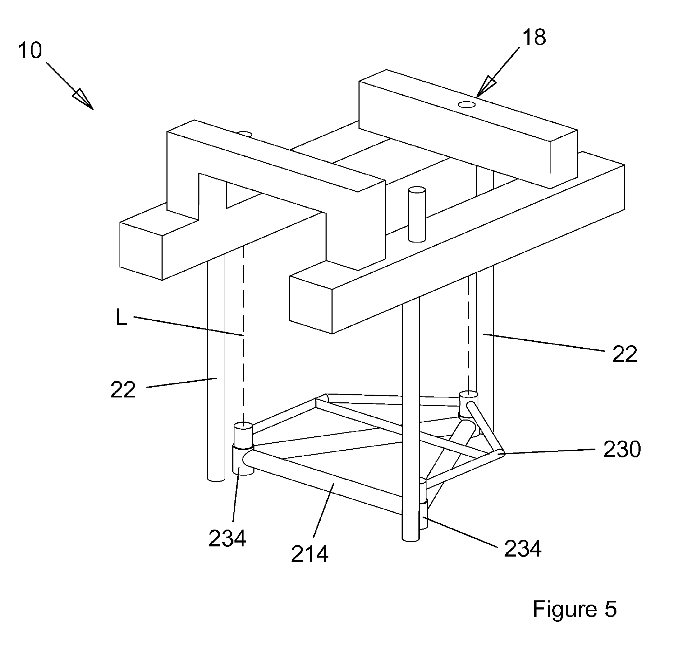

A further alternative design of base 214 and frame 230 is illustrated in Figure 5. In this arrangement the base 214 and frame 230 are designed to be located between the legs 22 but displaceable relative to the vessel 18 by means of the lifting lines L of the lifting system (not shown). The legs 22 thus serving purely to stand the vessel 18 on the seabed at the deployment site in order to provide a stable platform as defined by the main body 20 once elevated out of the water as described above, although without bearing down on the base 214. Once the raised platform of the main body 20 has been established the lifting system (not shown) can then be utilised in order to raise or lower the entire turbine system 12, or the turbine 16 independently of the base 214. The base 214 uses three feet 234 as lifting points 40 for engagement by couplings 232 on the frame 230, and the frame 230 may then be used as a vehicle to raise and lower the turbine system 12 or turbine 16.

It will therefore be appreciated that the displacement system 10 of the present invention provides a single vessel 18 which can transport and deploy an electrical system such as a hydroelectric turbine system 12 onto the seabed, and/or recover same from the seabed, while additionally providing a stable platform from which numerous operations may be performed on the turbine system 12.

## Claims

1. A displacement system for a submersible electrical system, the displacement system comprising a base; a vessel comprising a buoyant body and at least three rigid legs each displaceable relative to the body between a raised and a lowered position; wherein the base is adapted to be secured to and displaceable by the three legs.

2. A displacement system according to claim 1 comprising a frame locatable intermediate the legs and the base.

3. A displacement system according to claim 2 in which the frame is adapted to limit displacement of the legs relative to one another.

4. A displacement system according to claim 2 or 3 in which the frame comprises couplings to establish a connection with a free end of each of the legs.

5. A displacement system according to any of claims 2 to 4 in which the frame comprises couplings for establishing a connection the base.

6. A displacement system according to any of claims 2 to 5 in which the frame comprises connectors for establishing a connection with a free end of each of the legs.

7. A displacement system according to any of claims 2 to 6 in which the base comprises three ground contacting feet positioned to each be coincident with one of the legs when the base is secured beneath the legs.

8. A displacement system according to any preceding claim comprising a drilling system in operative association with at least one of the legs.

9. A displacement system according to any preceding claim comprising a grouting system in operative association with at least one of the legs.

10. A deployment system according to any preceding claim in which the vessel comprises a lifting system.

11. A displacement system according to claim 11 in which the lifting system comprises one or more winches operable to raise and lower a respective line from the vessel.

12. A displacement system according to any preceding claim in which the base is designed to bear the load of the vessel when raised out of a body of water on the legs.

13. A displacement system according to any preceding claim in which one or more of the legs are independently displaceable relative to the body of the vessel.

14. A method of displacing a submersible electrical system in a body of water comprising the steps of:
securing a base for the electrical system beneath at least three rigid legs of a deployment vessel; and
displacing the legs relative to a buoyant body of the vessel in order to displace the base within the body of water.

15. A method according to claim 14 comprising the step of positioning a frame intermediate a free end of each of the legs and the base.

16. A method according to claim 14 or 15 comprising the step of displacing the base into contact with an underwater substrate through displacement of the legs relative to the body of the vessel.

17. A method according to claim 16 comprising the step of raising the body of the vessel out of the body of water through further displacement of the legs relative to the body of the vessel following contact of the base with the underwater substrate.

18. A method according to claim 17 comprising the step of performing one or more operations relating to the electrical system while the body of the vessel is raised out of the body of water.

19. A method according to any of claims 14 to 18 comprising the step of independently displacing one or more of the legs.

20. A method according to any of claims 15 to 19 comprising utilising the legs to force one or more ground contacting feet of the base to at least partially penetrate the deployment substrate.
